# EUROPEAN PATENT APPLICATION

(11) **EP 2 833 665 A1**
(43) Date of publication of application: **04.02.2015**
(21) Application number: 13178805.1
(22) Date of filing: 31.07.2013
(51) Int. Cl.: H04W 24/02

(54) **Activation mechanism for small cells**

(71) Applicant: FUJITSU LIMITED, Kawasaki-shi, Kanagawa 211-8588 (JP)
(72) Inventor: Li, Zhaojun, Guildford, Surrey GU3 2DJ (GB); Moulsley, Timothy, Caterham, Surrey CXR3 5EE (GB); Bucknell, Paul, Arundel Place, BN2 1SP (GB)
(74) Representative: Stebbing, Timothy Charles

(57) **Abstract**

A method for activation of a wireless communications link between a terminal (UE) and a first base station (SCeNB) under control of a second base station (MeNB), the method comprising: the second base station (MeNB) sending a first activation request signal to the terminal (UE); and the terminal (UE), in response to the first activation request signal, sending a second activation request signal to the first base station (SCeNB). The terminal therefore acts as proxy for communicating an activation request from the second base station to the first base station. This is useful in Small Cell scenarios where backhaul latency may delay an activation request over the X2 interface between the base stations.

## Description

### Field of the Invention

The present invention relates to cellular wireless networks, particularly to so-called Small Cell networks and more particularly to the activation of "assisting cells" in such networks.

### Background of the Invention

Cellular wireless networks are widely known in which base stations (BSs) communicate with terminals (also called user equipments (UEs), or subscriber or mobile stations) within range of the BSs. The geographical areas covered by base stations are generally referred to as cells, and typically many BSs are provided in appropriate locations so as to form a network or system covering a wide geographical area more or less seamlessly with adjacent and/or overlapping cells. (In this specification, the terms "system" and "network" are used synonymously except where the context requires otherwise). In each cell, the available bandwidth is divided into individual resource allocations for the user equipments which it serves. Communications in the network comprise downlink communications from the base station to the terminal, and uplink communications from the terminal to the base station. Data to be transmitted in the uplink, in the form of a data stream comprising a sequence of data packets, may be user data or control data and may have different QoS (Quality of Service) requirements, depending on the application or purpose.

### Basic LTE Network

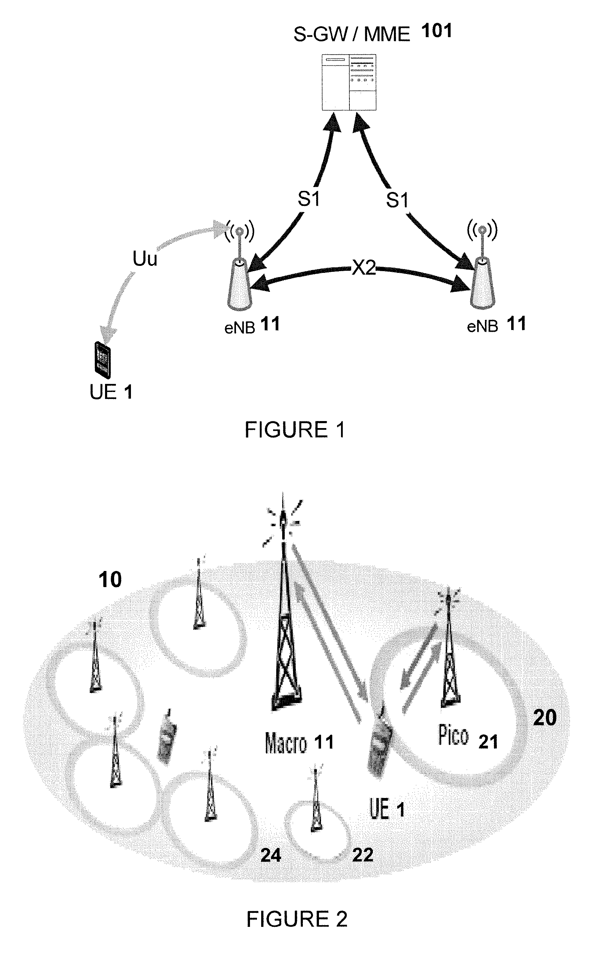

One type of cellular wireless network is based upon the set of standards referred to as Long-Term Evolution (LTE). The current version of the standard, Release 11, is also referred to as LTE-A (LTE-Advanced). The network topology in LTE is illustrated in Figure 1. As can be seen, each terminal 1, called a UE in LTE, connects over a wireless communications link via a Uu interface to a base station in the form of an enhanced node-B or eNodeB 11. It should be noted that various types of eNodeB are possible. An eNodeB may support one or more cells at different carrier frequencies having differing transmit powers and different antenna configurations, and therefore providing coverage areas (cells) of differing sizes. Multiple eNodeBs deployed in a given geographical area constitute a wireless network called the E-UTRAN (and henceforth generally referred to simply as "the network"). Cells in an LTE network can operate either in a Time Division Duplex, TDD, mode in which the uplink and downlink of the communications link are separated in time but use the same carrier frequency, or Frequency Division Duplex, FDD, in which the uplink and downlink occur simultaneously at different carrier frequencies. Communications are organised in the time domain into frames each made up of a plurality of subframes.

Each eNodeB 11 in turn is connected by a (usually) wired link using an interface called S1 to higher-level or "core network" entities 101, including a Serving Gateway (S-GW), and a Mobility Management Entity (MME) for managing the system and sending control signalling to other nodes, particularly eNodeBs, in the network. In addition (not shown), a Packet Data Network (PDN) Gateway (P-GW) is present, separately or combined with the S-GW, to exchange data packets with any packet data network including the Internet. Thus, communication is possible between the LTE network and other networks.

### Small Cell Network (SCN)

Figure 1 shows what is sometimes called a "homogeneous network"; that is, a network of base stations in a planned layout and which have similar transmit power levels, antenna patterns, receiver noise floors and similar backhaul connectivity to the core network. Current wireless cellular networks are typically deployed as homogeneous networks using a macro-centric planned process. The locations of the base stations are carefully decided by network planning, and the base station settings are properly configured to maximise the coverage and control the interference between base stations. However, it is widely assumed that future cellular wireless networks will more frequently adopt a "heterogeneous network" structure composed of two or more different kinds of cell, also (and henceforth) referred to as a Small Cell Network or SCN.

Figure 2 depicts an example of a simple SCN. The large ellipse 10 represents the coverage area or footprint of a Macro cell provided by a base station (Macro BS) 11. The smaller ellipses 20, 22 and 24 represent Small cells within the coverage area of Macro cell 10, each having a respective base station (exemplified by Pico BS 21). Here, the Macro cell is a cell providing basic "underlay" coverage in the network of a certain area, and the Small cells are overlapped and overlaid over the Macro cell, using the same or different carrier frequencies for capacity boosting purposes particularly within so-called "hot spot zones". Although not shown in Figure 2 for simplicity, the Small cells themselves may overlap such that the UE 1 is in range of more than one Small cell simultaneously. A UE 1 is thus able to maintain communications links both with Macro BS 11 and at least one Pico BS 21 (but not necessarily simultaneously) as indicated by the arrows in the Figure.

When a UE starts to use a given cell for its communication, that cell is said to be "activated" for that UE, whether or not the cell is already in use by any other UEs. Incidentally, although the Macro and Small cells are depicted here as being provided by different base stations, this is not always essential and the same base station may be responsible for both a Macro cell and a Small cell. For example, a cell operating in a higher frequency band is likely to experience greater pathloss, and thus have shorter range, than one in a lower frequency band; thus the same base station may provide both one or more lower-frequency Macro cells and one or more higher-frequency Small cells. In any case, however, it is necessary for coordination to be supervised in some way, for example so that there is a common understanding on both the network and UE side of when activation will commence. Generally, if it is decided in subframe n to activate a given cell then the Small cell must be ready by some later subframe n+x where x=8 is currently fixed in LTE specifications. In an SCN, typically the MeNB will take this supervisory role.

As will be apparent from the above discussion, a UE will in general experience a differing quality of communications link via each of the cells activated for that UE. The quality of a communications link is also referred to as the channel condition and can be quantified by various measurements including Reference Signal Received Power (RSRP) and Reference Signal Received Quality (RSRQ). As the names imply, these measurements are obtained by the UE measuring reference signals transmitted on each of the cells.

Although only two types of cell are shown in Figure 2, various types of Small cell may be present in a SCN including (in decreasing order of size), cells similar to current Micro, Pico and Femto cells. Femto and Pico cells can be overlaid on either Macro or Micro cells. Thus, networks can be designed such that the Macro cells provide blanket coverage while the Micro, Pico and/or Femto cells (or Small Cells) provide additional capacity. The envisaged Small Cells may also correspond to a New Carrier Type (NCT) not yet defined in LTE specifications.

### Carrier Aggregation (CA)

SCNs will support and enhance various capacity-boosting schemes to be applied to UEs, including so-called Carrier Aggregation (CA) which has been introduced into 3GPP (in the homogeneous network context) since LTE Release 10. Details of CA as applied to LTE are given in the 3GPP standard TS36.300, hereby incorporated by reference.

In CA, two or more Component Carriers (CCs) at different carrier frequencies are aggregated in order to support wider transmission bandwidths up to 100MHz (made up of a maximum of five CCs each having a bandwidth around their carrier frequency of up to 20MHz). A UE may simultaneously receive or transmit on one or multiple CCs depending on its capabilities.

Management of connections of UEs to the network, broadcast of system information and establishment of radio bearers is part of Radio Resource Control (RRC). When CA is configured, the UE only has one RRC connection with the network. At RRC connection establishment/re-establishment/handover, one serving cell provides the system information which the UE needs to join the network, and this cell is referred to as the Primary Cell (PCell). All other CCs are called Secondary Cells or SCells. Individual Scells may be activated/deactivated from the UE perspective, and the activation process for Small cells could be carried out in a similar way.

Generally, one carrier corresponds to one cell. In the downlink, the carrier corresponding to the PCell is the Downlink Primary Component Carrier (DL PCC) while in the uplink it is the Uplink Primary Component Carrier (UL PCC). Incidentally, in this specification the terms "carrier" and "cell" are used somewhat interchangeably; it should be borne in mind, however that although different carrier frequencies always imply different cells, the reverse is not necessarily the case: a single carrier frequency can support one or more cells.

Therefore, a UE using CA has a plurality of serving cells, one for each CC, and the CCs may for example correspond to Macro and Small cells in a SCN, such that the same UE may use the Macro cell as its "primary" cell (PCell) and a Small cell as a "secondary" cell (SCell). As well as possibly having different carrier frequencies, the Macro and Small cells may have different bandwidths. Generally, each cell is provided by base station antennas at a single site, but this does not exclude the possibility of one cell being provided by antennas at different sites.

A potential issue with CA in SCNs is that at least some of the CCs are likely to be provided by small base stations similar to existing Home eNodeBs and femtocells, which use broadband internet for their backhaul connectivity to the network, and are therefore liable to incur greater latency (including a greater time taken to exchange information with other base stations) compared with macro cell eNodeBs.

Where the CCs are provided by geographically-separated base stations, these base stations will also generally experience different signal propagation delays from the UE. In order to take advantage of CA in the SCN scenario, Release 11 of LTE provides for multiple uplink Timing Advances (TAs), by which a UE can ensure that its uplink transmissions arrive in synchronization with transmissions from other UEs at the base stations providing the cells. Since the same base station may provide more than one cell, the concept of a Timing Advance Group (TAG) is used to group together carriers with the same TA value. However, various aspects of how CA may be most advantageously applied to the SCN have yet to be determined, as explained later.

### Uplink Channels in LTE

An LTE system is a scheduled system in which transmission is organized in "frames" each containing twenty slots, two consecutive slots being referred to as a "subframe". For each transmission time interval of one or more subframes, a new scheduling decision is taken regarding which UEs are assigned/allocated to which time/frequency/spatial/code resources during this transmission time interval.

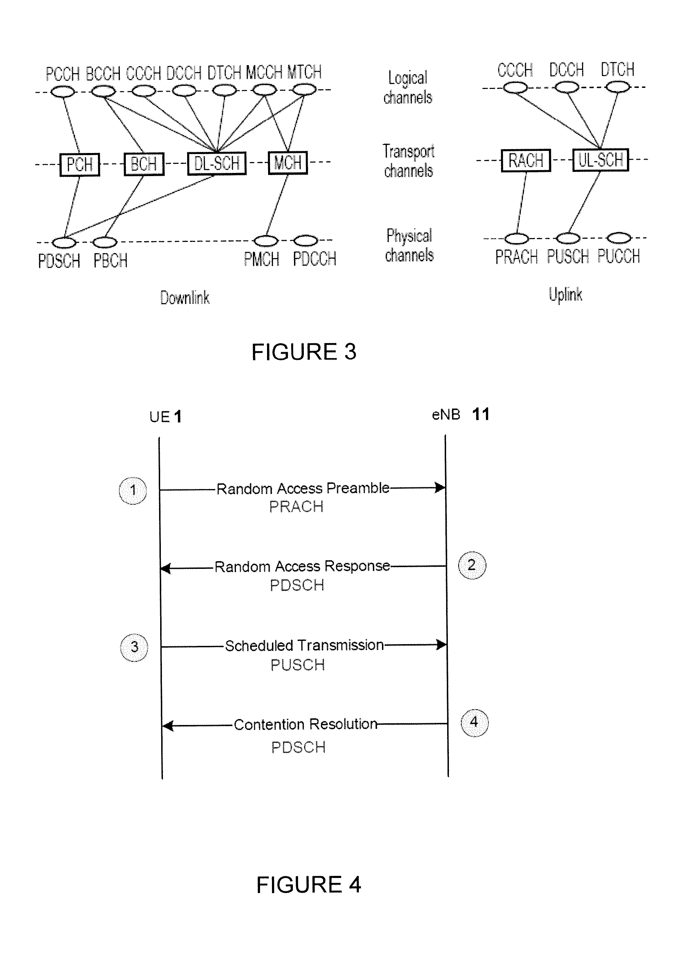

Several "channels" for data and signalling are defined at various levels of abstraction within the network. Figure 3 shows some of the channels defined in LTE-based systems at each of a logical level, transport layer level and physical layer level, each corresponding to a different protocol layer within the well-known OSI model, and the mappings between them. For present purposes, the uplink channels are of particular interest.

In Figure 3, physical channels defined in the uplink are a Physical Random Access Channel (PRACH), a Physical Uplink Shared Channel (PUSCH), and a Physical Uplink Control Channel (PUCCH). An uplink physical channel corresponds to a set of resources carrying information originating from higher layers. In addition to the uplink channels, uplink signals such as reference signals, primary and secondary synchronization signals are typically defined.

At the transport channel level in Figure 3, an uplink shared channel UL-SCH maps to the physical channel PUSCH whilst a random access channel RACH maps to the above mentioned PRACH. Incidentally, although Figure 3 shows logical channels, these define set of logical channel types for different kinds of data transfer services as offered by the MAC, where each logical channel type is defined by what type of information is transferred.

The above mentioned 3GPP TS 36.300 provides an overall description of the radio interface protocol architecture used in LTE-based systems and in particular section 5.2 of 3GPP TS 36.300 relates to uplink transmission schemes. The physical channels in the uplink of LTE-based systems are described, for example, in 3GPP TS 36.211, section 5, which is hereby also incorporated by reference. Other parts of the LTE standard of relevance to the present invention and hereby incorporated by reference are 3GPP TS 36.321, 3GPP TS 36.331, and 3GPP TS 36.423.

User data and optionally also higher-level control signalling is carried on the Physical Uplink Shared Channel PUSCH. The physical uplink control channel PUCCH carries uplink control information such as a scheduling request (SR), see below, and a channel quality indicator (CQI) report. As illustrated in Figure 3, there is a downlink counterpart channel to the PUCCH, which is the Physical Downlink Control Channel (PDCCH) for carrying, in response to the scheduling request, an uplink scheduling grant. Incidentally, in LTE-A there is also an enhanced PDCCH called EPDCCH, which allows coordination among eNodeBs for reducing inter-cell interference.

The uplink scheduling grant also indicates the transmission rate (i.e. modulation and code rate). If PUSCH transmission occurs when the PUCCH would otherwise be transmitted, the control information to be carried on PUCCH may be transmitted on PUSCH along with user data. Simultaneous transmission of PUCCH and PUSCH from the same UE may be supported if enabled by higher layers. The PUCCH may support multiple formats as indicated in 3GPP TS 36.211, section 5.4.

Because transmissions between UE and base station are prone to transmission errors due to interference, a procedure is available for each packet sent in uplink and downlink direction to be acknowledged by the receiver. This is done by sending Hybrid Automatic Repeat Request (HARQ) acknowledgments or non-acknowledgments (ACK/NACK) on control channels. On the downlink, ACK/NACK is sent on a Physical HARQ Indicator Channel (PHICH). On the uplink ACK/NACK is sent on PUCCH.

The Physical Random Access Channel PRACH is used to carry the Random Access Channel (RACH) for accessing the network if the UE does not have any allocated uplink transmission resource. If a scheduling request (SR) is triggered at the UE, for example by arrival of data for transmission on PUSCH, when no PUSCH resources have been allocated to the UE, the SR is transmitted on a dedicated resource for this purpose. If no such resources have been allocated to the UE, the RACH procedure on PRACH is initiated.

Figure 4 shows a conventional contention-based RACH procedure in LTE which operates as follows:-
(i) The UE 1 receives the downlink broadcast channel for the cell of interest (serving cell).
(ii) The eNodeB 11 of the UE's serving cell (PCell) indicates cell specific information including the following:
   - resources available for PRACH
   - signatures available (up to 64)
   - signatures corresponding to small and large message sizes.
(iii) The UE selects a PRACH preamble signature according to those available for contention based access and the intended message size.
(iv) The UE 1 transmits the PRACH preamble (also called "Message 1", indicated by (1) in the Figure) on the uplink of the serving cell. The eNodeB 11 receives Message 1 and estimates the transmission timing of the UE.
(v) The UE 1 monitors a specified downlink channel for a response from the eNodeB 11. In response to the UE's transmission of Message 1, the UE 1 receives a Random Access Response or RAR, "Message 2" indicated by (2) in the Figure. This contains an UL grant for transmission on PUSCH and a Timing Advance (TA) command for the UE to adjust its transmission timing..
(vi) In response to Message 2, the UE 10 transmits on PUSCH ("Message 3", shown at (3) in the Figure) using the UL grant and TA information contained in Message 2.
(vii) As indicated at (4), a contention resolution message may be sent from eNodeB 11 in the event that the eNodeB 11 received the same preamble signature simultaneously from more than one UE, and more than one of these UEs transmitted Message 3.

If the UE does not receive any response from the eNodeB, the UE selects a new signature and sends a new transmission in a RACH sub-frame after a random back-off time. For contention free RACH access, the procedure is similar except that the UE is configured with a dedicated signature.

### Channels in CA

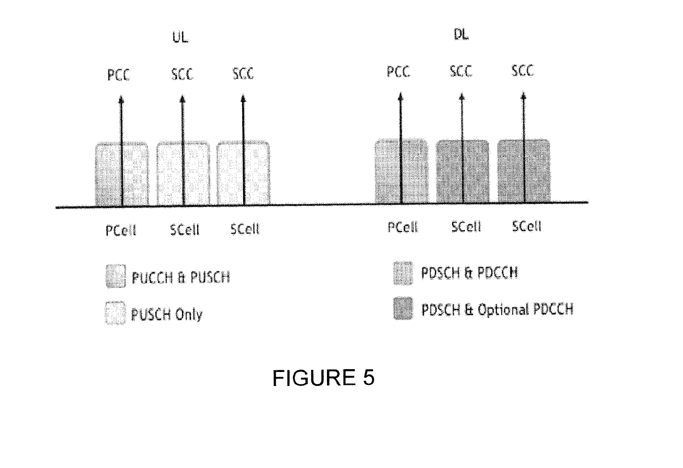

Having outlined some of the more important channels defined in LTE, their relationship to cells/CCs in the CA scenario can now be described using Figure 5.

As shown in Figure 5, under current LTE proposals, each PCell can transmit PDCCH to a UE. An SCell may (or may not) provide PDCCH to a UE, depending on UE capabilities; however, uplink data on PUSCH, and BSR and some RACH can be transmitted by a UE having the required capabilities, on both PCell and SCell. Correspondingly there is a separate transport channel UL-SCH for each cell. For LTE up to and including Release 11 the uplink control channel (PUCCH), which supports SR, is only transmitted on the PCell. Similarly, PRACH for scheduling requests is only transmitted on the PCell. However, these restrictions may not apply in future Releases.

If an SCell does not carry PDCCH, this implies that the scheduling information for that cell has to be carried in PDCCH of another cell (typically the PCell) - so called cross-carrier scheduling. The PCell and SCells should have identical or very similar transmission timing which allows, for example, PDCCH on one cell to schedule resources on a different cell, and ACK/NACKs for PDSCH transmissions on SCells to be sent on the PCell. SCells may have different transmission timing at the UE in order to allow for the possibility that the cells are supported by antennas at different geographical sites. A PCell and/or SCells with the same timing would belong to the same TAG (Time Alignment Group). However, because of the tight timing synchronization requirements between PUCCH on the PCell and PDSCH on the SCells, PCells and SCells can be assumed to be controlled by the same eNodeB.

To summarise the above background explanation, in a mobile communication system such as LTE using Carrier Aggregation (CA), two or more Component Carriers (CCs) are aggregated in order to support wider transmission bandwidths up to 100MHz. A UE may simultaneously receive or transmit on one or multiple CCs depending on its capabilities. In addition to the PCell, one or more SCells at different carrier frequencies may be configured for a UE. The PCell and SCells should have identical or very similar transmission timing, which allows, for example, PDCCH on one cell to schedule resources on a different cell, and ACK/NACKs for PDSCH transmissions on SCells to be sent on the PCell.

If the UE is configured with one or more SCells, the network may activate and deactivate the configured SCells. The PCell is always activated. The network activates and deactivates the SCell(s) by sending an Activation/Deactivation MAC control element. Furthermore, the UE maintains a timer per configured SCell and deactivates the associated SCell upon its expiry. The timing of activation and deactivation is carefully defined in order to ensure a common understanding between the eNodeB and the UE. If a MAC control element activating a SCell is received in subframe n, then in accordance with current practice the SCell has to be ready for operation in subframe n+8. Hence, from subframe n+8, the UE is required to apply normal SCell operation including:
- SRS transmissions on the SCell;
- CQI/PMI/RI/PTI reporting for the SCell;
- PDCCH monitoring on the SCell;
- PDCCH monitoring for the SCell.

Here, SRS means Sounding Reference Signal and is one example of the above mentioned reference signals which are measured by the UE in order to determine the channel condition of a cell.

The "Small Cell" concept which is currently being studied in 3GPP provides for the possibility of a terminal being served by both a macro cell and one or more Small Cells, operating at the same or different carrier frequencies. This has some similarities with CA, but the timing relation between the cells may be less strictly controlled for Small Cells, and the cells may be controlled by different eNodeBs. Cells at significantly different frequencies (as envisaged for one of the Small Cell scenarios) are likely to have different channel conditions and traffic capacities. The Small Cell carrier may have higher data rate capacity, but less consistent geographical coverage. Especially the backhaul capacity and latency may vary in Small Cell scenarios, for which a summary of typical backhaul is provided below.

| **Backhaul Technology** | **Latency (One way)** | **Throughput** |
|---|---|---|
| Fibre Access 1 | 10-30ms | 10M-10Gbps |
| Fibre Access 2 | 5-10ms | 100-1000Mbps |
| Fibre Access 3 | 2-5ms | 50M-10Gbps |
| DSL Access | 15-60ms | 10-100 Mbps |
| Cable | 25-35ms | 10-100 Mbps |
| Wireless Backhaul | 5-35ms | 10Mbps - 100Mbps typical, may be up to Gbps range |

However, the current mechanisms in LTE for activating/deactivating SCells were designed under the assumption of a single eNodeB controlling both PCell and SCells with no backhaul present, or for a distributed deployment with ideal backhaul (one way latency less than 2.5 µs). For the Small Cell case the long latency of the non-ideal backhaul deployed between eNodeBs controlling the PCell (e.g. macro cell) and SCells (e.g. Small Cells) respectively does not allow fast activation and deactivation of the SCells.

### Summary of the Invention

According to a first aspect of the present invention, there is provided a method for activation of a wireless communications link between a terminal and a first base station under control of a second base station, the method comprising:
the second base station sending a first activation request signal to the terminal;
   and
the terminal, in response to the first activation request signal, sending a second activation request signal to the first base station.

In other words, in the above method, the terminal acts as a proxy for the activation request signal from the second base station. This is useful in Small Cell scenarios where backhaul latency may delay an activation request over the X2 interface between the base stations.

Here, the first base station may be a base station providing an "assisting cell" as referred to elsewhere in this specification, whilst the second base station may control a primary cell (PCell) of the terminal. The "assisting cell" may be, but is not restricted to, a secondary PCell (SPCell) referred to elsewhere. Other cell types may also be present; for example a network may configure a UE with a PCell, and with zero or more of the SPCells just mentioned and also with zero or more conventional SCells. In such a configuration it could be assumed that SCells are controlled by the same base station as the PCell so that the present invention is not necessarily applied to the SCell(s).

The second base station, which provides the activation request signal in the above method, may do this on the basis that the first base station which receives the request is a peer (and therefore not obliged to follow the request), or on the basis that it has a super-ordinate role with respect to the first base station. This super-ordinate role may be configured on a permanent basis or may be a temporary arrangement.

Thus for example the first base station may be a "Small Cell" base station whilst the second base station may be a Macro Cell base station. In this case the Small Cell provides the wireless communications link to be activated, and meanwhile the terminal is already in wireless communication with the second base station via the Macro Cell.

Preferably, the terminal also acts as a proxy, or relay, for the first base station's response to the activation request signal. That is, in the above method, the first base station, in response to the second activation request signal, may send a first activation response to the terminal, in response to which the terminal may send a second activation response to the second base station. Alternatively, the first base station may send an activation response directly to the second base station. This activation response may either directly follow the receipt of the second activation request signal by the first base station, or may be transmitted some time later such as upon actual activation of the communications link (cell) provided by the first base station.

The first activation request signal may specify a cell ID of a cell controlled by the first base station. This is advantageous if there are a plurality of possible cells which may be activated. If the first base station controls a plurality of cells, then the second activation request signal preferably should likewise include the cell ID.

The first activation request signal may specify a time period for activation of the communications link. This is particularly applicable if the activation is on a "trial basis" as described later. Also, the communications link may be activated with limited functionality during said time period, again particularly for activation on a trial basis. This can allow evaluation of the channel condition between the terminal and the cell concerned prior to a full activation with respect to that terminal. In this case the second base station may determine whether to maintain the communications link after expiry of said time period.

The second base station may provide an activation request signal for each of a plurality of cells in turn, these cells being controlled by one or more first base stations.

A method of the invention may further comprise at least one of the terminal and the first base station sending a measurement report to the second base station regarding a channel quality of said communications link.

A method of the invention allows not only activation of a communications link with respect to a given terminal, but also deactivation of a communications link already established. Thus, in an embodiment of the present invention, the method further comprises deactivating the communications link by the second base station sending a first deactivation request signal to the terminal; and the terminal sending a second deactivation request signal to the first base station.

Alternatively, deactivation may be initiated by the first base station. In this case the method may further comprise the first base station sending a deactivation request signal to the second base station either directly or via the terminal.

It should be noted that "deactivation" here refers to terminating a communications link of the first base station with a specific terminal, and does not necessarily imply shutting down the first base station. There may be other terminals with which the first base station continues to maintain communications links.

The activation request signals referred to above may take various forms. In one embodiment the first activation request signal comprises a MAC message. The second activation request signal may comprise a PRACH preamble or a MAC message.

According to a second aspect of the present invention, there is provided a wireless communication system comprising:
a first base station;
a second base station; and
a terminal; wherein
the second base station is arranged to send a first activation request signal to the terminal;
the terminal is responsive to the first activation request signal to send a second activation request signal to the first base station; and
the first base station is arranged to activate a wireless communications link between the first base station and the terminal in response to the second activation request signal.

According to a third aspect of the present invention, there is provided a first base station in a wireless communication system comprising, in addition to the first base station, a second base station and a terminal; wherein
the first base station is arranged to receive, from the terminal, an activation request signal with respect to a wireless communications link between the first base station and the terminal; and
the first base station is arranged to activate a wireless communications link between the first base station and the terminal in response to the activation request signal and transmit a confirmation of the activation to the second base station.

According to a fourth aspect of the present invention, there is provided a second base station in a wireless communication system comprising, in addition to the second base station, a first base station and a terminal; wherein
the second base station is arranged to send a first activation request signal to the terminal for forwarding to the first base station; and
the second base station is arranged to receive a confirmation of activation of a communications link between the first base station and the terminal.

According to a fifth aspect of the present invention, there is provided a terminal for use in a wireless communication system, the system having a first base station and a second base station, wherein
the terminal is arranged to receive, from the second base station, a first activation request signal with respect to a communications link between the first base station and the terminal; and
the terminal is arranged to send a second activation request signal to the first base station for activating the communications link between the first base station and the terminal, in response to the first activation request signal.

In a further aspect, the present invention provides software in the form of computer-readable instructions which, when executed by a processor of radio equipment, provides the first or second base station or the terminal as defined above. Such software may be recorded on one or more non-transitory storage media.

Thus, embodiments of the present invention provide for fast, efficient and reliable activation and deactivation of an assisting cell (e.g. "secondary PCell" or SPCell) in Small Cell scenarios, via a terminal. To achieve this end, embodiments of the present invention allow the terminal to act as proxy for activation/deactivation request signals from the PCell to one or more assisting cells. Moreover, the assisting cells may be activated on a trial basis for further evaluation of the channel condition, prior to fully activating the assisting cell for offloading traffic of the terminal (or a specific service thereof) from the PCell.

In general, and unless there is a clear intention to the contrary, features described with respect to one aspect of the invention may be applied equally and in any combination to any other aspect, even if such a combination is not explicitly mentioned or described herein.

As is evident from the foregoing, embodiments of the present invention involve communications links between base stations and terminals (UEs) in a wireless communication system. The cells are associated with one or more base stations. Here we refer to a "base station" as an entity controlling at least one set of transmit and/or receive antennas and associated equipment at a given geographical location and typically supporting one or more cells. For the purposes of description, this is intended to be equivalent to the eNodeB in LTE (unless otherwise indicated, or the context demands otherwise). However, subject to the functional requirements of the invention, some or all base stations may take any other form suitable for transmitting and receiving signals from terminals. Thus a base station may control antennas, cells etc. at more than one geographical site. Terms often used to describe a physical location where antennas are placed are "base station site" or "transmission point". Unless otherwise indicated, it should be assumed that a single base station controls all the cells supported from a given transmission point.

Similarly, in the present invention, each terminal may take any form suitable for transmitting and receiving signals on communications links with base stations. For example, the terminal may take the form of a user equipment (UE), subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation whatsoever is to be implied from this.

### Brief Description of the Drawings

Reference is made, by way of example only, to the accompanying drawings in which:
Figure 1 shows a network topology in LTE;
Figure 2 illustrates the principle of a Small Cell Network (SCN);
Figure 3 illustrates channels at each of a plurality of protocol layers in LTE;
Figure 4 shows a signalling sequence in a contention-based random access procedure in LTE;
Figure 5 shows how LTE physical channels are allocated to a PCell and SCell in a SCN;
Figure 6 shows a signalling sequence for activating an assisting cell in the first embodiment of the invention;
Figure 7 shows a signalling sequence for activating an assisting cell in the second embodiment of the invention;
Figure 8 is a schematic block diagram of a terminal for use in the present invention; and
Figure 9 is a schematic block diagram of a base station for use in the present invention.

### Detailed Description

In the use of the "Small Cell" concept, one possible model of operation is where one cell is defined to be the PCell (as currently in LTE), and additional cells include one or more assisting cells or secondary PCells (SPCells). Here, the term "SPCell" is used to denote an assisting cell which has more one or more features hitherto associated with a PCell; for example the ability to transmit PUCCH, or to have an RRC connection of its own. As an example the macro cell could be the PCell, and one or more Small Cells could be SPCells; however, this does not preclude the possibility of any type of cell being the PCell. Conversely, an SPCell of a given UE could be a macro cell acting as the PCell of other UEs. Although of less relevance to the present invention, one or more conventional secondary cells (SCells) may also be present.

As already mentioned, current mechanisms in LTE for activating/deactivating SCells were designed under the assumption of a single eNodeB controlling both PCell and SCells with no backhaul present, or for a distributed deployment with ideal backhaul (one way latency less than 2.5 us). Thus, the term "SCell" conventionally implies intra-eNB Carrier Aggregation. By contrast, here the term "SPCell" is intended to denote the inter-eNB CA of a Small Cell network.

For the Small Cell case the long latency of the non-ideal backhaul deployed between eNodeBs controlling the PCell (e.g. macro cell) and SPCells (e.g. Small Cells) respectively does not allow fast activation and deactivation of a secondary PCell or an assisting cell. For example, in a typical case a macro cell and a Small Cell would be controlled by different eNodeBs, which communicate via backhaul with typical one way transmission latency of more than 5ms plus processing delay of 2ms. Therefore in Small Cell scenarios it takes more than 7ms for a PCell (typically controlled by the macro eNodeB) to activate/deactivate a secondary Pcell/assisting cell (typically controlled by the Small Cell eNodeB), which leaves very little or no time for the secondary Pcell/assisting cell to be ready for operation if the activation command is sent to the UE around the same time, as is the typical case.

Thus, one aim of embodiments of the invention is to enable fast, efficient and reliable activation and deactivation of a secondary Pcell or an assisting cell in Small Cell scenarios. In LTE, the typical delay across the air interface from the UE to the network is less than 5ms, which is better than most of the non-ideal backhaul deployed for communication between two eNodeBs. A suitable method for fast activation and deactivation could be to route the activation/deactivation request signals via the UE, which also has the advantage that the UE can confirm the connection with the secondary Pcell/assisting cell. In addition, in order to determine the suitable cell to be activated for the intended service of a specific UE, several cells can be activated for a short period (in the "trial" stage) for channel quality assessment/evaluation before a fully activation is issued for the selected most suitable cell.

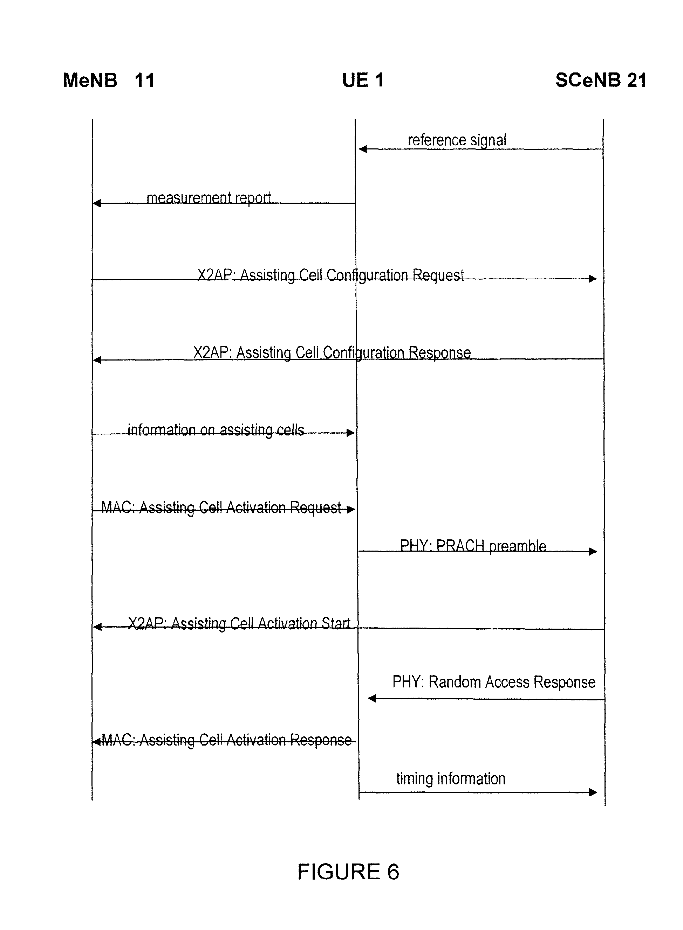

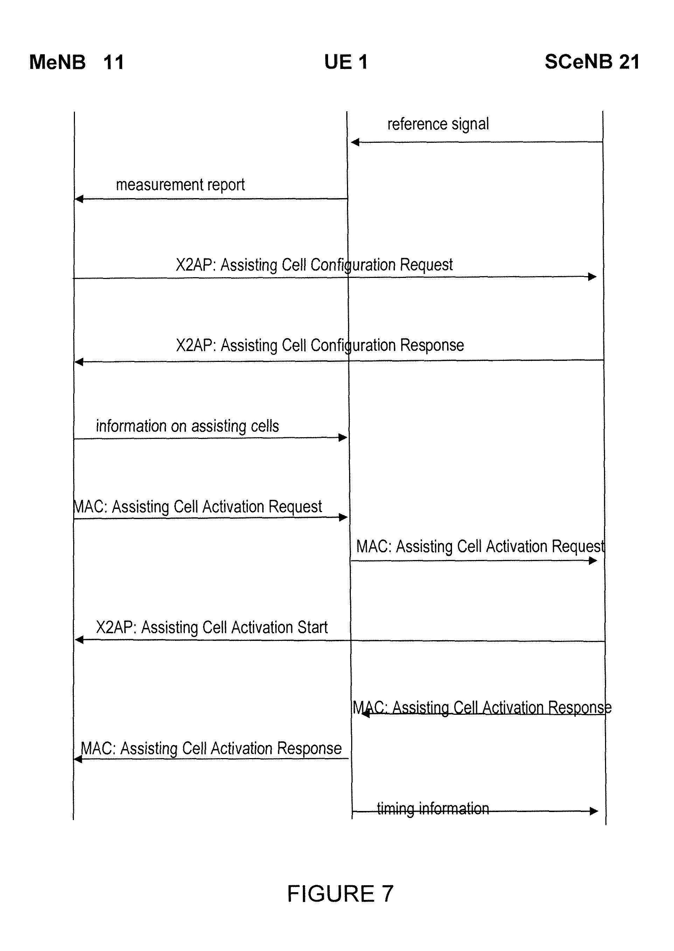

Having outlined a principle of the invention, embodiments will now be described with respect to Figures 6 and 7. In general, unless otherwise indicated, the embodiments described below are based on LTE, where the network comprises multiple eNodeBs, each controlling one or more downlink cells, and at least some of the downlink cells having a corresponding uplink cell. Each DL cell may serve one or more terminals (UEs) which may receive and decode signals transmitted in that serving cell. In order to control the use of transmission resources in time, frequency and spatial domains for transmission to and from the UEs, the eNodeB sends control channel messages (PDCCH or EPDCCH) to the UEs. The resource assignments granted by the eNB in the DL are determined using channel state information. This is provided by feedback from the UE based on channel measurements made using reference signals transmitted by the eNB for each cell that it supports. This feedback typically consists of data rate in the form of a channel quality indicator (CQI), a precoding matrix indicator (PMI) and rank indicator (RI). We assume that a UE can be served by a macro cell and a Small Cell simultaneously, and higher layer communication is possible for the UE to both macro cell and Small Cell.

In a first embodiment, the activation signalling to the UE uses MAC layer communication. Figure 6 illustrates an example cell activation message flow of the invention in this embodiment, where a UE is currently served by a PCell, being a macro cell (controlled by the Macro eNodeB (MeNB)) and one or more neighbouring Small Cells (controlled by one or more Small Cell eNodeB (SCeNB)) can be detected by the UE. These Small Cells are capable of acting as Assisting Cells for the UE, such as the SPCells referred to above. Depending on the channel quality between the UE and the SCeNB(s) on the Small Cells, it may or may not be practical to offload traffic for the UE from the PCell to the Small Cell(s). The Small Cells are therefore regarded as "candidate" cells.

The cell activation procedure includes the following steps:
Step 1: As indicated by the arrow labelled "reference signal", topmost in Figure 6, the candidate cells are assumed either by default to be broadcasting common reference signals which any UE within range can detect, or to have been requested by the Macro eNodeB to transmit reference signals specifically for measurement by the UE. The latter case may involve a kind of partial switch-on of the Small Cell, by transmitting at least a reduced set of reference signals prior to full activation (see below). In either case, as shown in Figure 6 by the arrow "measurement report" from UE 1 to MeNB 11, the UE sends the serving Macro eNodeB measurement reports to indicate the candidate Small Cells for traffic offloading.
Step 2: The Macro eNodeB decides to prepare the cell activation towards the candidate Small Cell(s) by sending a request (shown by "Assisting Cell Configuration Request" in Figure 6) to the SCeNB(s) controlling the candidate Small Cell(s). This configuration request is less time-critical than the actual activation request described later, and therefore can be directed through the X2 interface between the MeNB and SCeNB.

Factors which the MeNB may consider in reaching this decision can include:-
- the UE's measurement reports, e.g. RSRP/RSRQ of the candidate cells
- load status of the candidate cells, which can be obtained via existing X2 procedures (e.g. resource status reporting procedures)
- QoS and data requirements of services being provided to the UE
- other factors including backhaul performance between the MeNB and the candidate cell eNBs.

This request can be used for one or more UEs. For each UE, the Macro eNodeB may include the information for the intended services to be offloaded to the Small Cell, such as QoS parameters, security information, etc.

Step 3: The Small Cell eNodeB decides to accept or reject the request based on, e.g. admission control. If accepted, the Small Cell eNodeB returns a response message to the MeNB with sufficient radio configuration information for the UE to access the Small Cell, such as PRACH preamble. This is shown as "Assisting Cell Configuration Response" in Figure 6. Again this signal can be sent over X2.

Step 4: As indicated by the arrow labelled "information on assisting cells" in Figure 6, the Macro eNodeB instructs the UE to be ready to access one or more Small Cells that have accepted the activation request by using, for example, information provided to the Macro eNB by the Small Cell eNodeB. This could involve some configuration of the UE, for example by means of RRC signalling providing the UE with the details of the Small Cell (such as system bandwidth, antenna configuration, PRACH preamble). It should be noted that this step may be carried out earlier than the actual activation, allowing the method to proceed directly to Step 5 where the UE has been suitably configured in advance.

Step 5: When the Macro eNodeB decides to activate one or more small of the cells in order to offload some or all of the data traffic for the UE, it sends a message (request signal) to the UE which indicates the intended Small Cell, preferably using a MAC control element. This is shown in Figure 6 as "Assisting Cell Activation Request".

In this embodiment the UE accesses the Small Cell with an physical layer indication, such as a specific PRACH preamble as shown in Figure 6. This implicitly indicates activation to the Assisting Cell. The offload operation in the secondary cell / assisting cell on the uplink will start soon. Meanwhile, the Small Cell eNodeB sends a response message to the Macro eNodeB over backhaul (e.g. X2 interface) to acknowledge the start of the activation. This is shown by "Assisting Cell Activation Start" in Figure 6.

The transmission of a PRACH preamble to the Assisting Cell, and subsequent response (the Random Access Response in Figure 6), enables the determination of any adjustment of timing needed in order to align uplink transmissions from the UE with the timing of the Assisting Cell. This information can be used by the network to facilitate timing synchronisation between these cells.

The UE sends an Assisting Cell Activation Response message to the MeNB to confirm activation of the Assisting Cell, this message optionally incorporating the above timing information. Timing differences between Pcell and Assisting Cell observed by the UE in UL and/or DL may also be reported to the Assisting Cell, as indicated by the final signal "timing information" between UE 1 and SCeNB 21 shown in Figure 6. Incidentally, once the Assisting Cell (SPCell) is activated from the PHY viewpoint, the UE can already send reports to the SPCell.

In a variation of the first embodiment, the Macro eNodeB may initially activate a trial (or intermediate) state of one or more Small Cells to further evaluate the channel condition of the cells before offloading. In such a state, only part of functionality of the Assisting Cell is available (e.g. control channel signalling and reporting of channel state measurements may be possible, but without uplink transmission of user data to the Assisting Cell). To enter this trial state the Macro eNB sends a MAC control message to the UE which includes the cell ID of at least one intended Small Cell as well as an indication of a time window for trial cell activation. This message is the alternative format of Assisting Cell Activation Request from MeNB to UE, and may cover more than one candidate cell. Here, the time window indicates how long the UE should try to access the candidate cell for the trial cell activation, and during this period the UE performs measurements to evaluate the channel condition of the candidate cell.

Before sending the above MAC control message, the MeNB may rank the candidate cells in some way (for example based on RSRP/RSRQ at the UE) in order to determine which cell(s) to make the subject of the message or which the UE should try first.

The UE accesses the Small Cell using PRACH. Both the UE and the Small Cell start measurements to evaluate the channel condition. For example, the UE may begin transmitting SRS which the Small Cell can measure. The DL channel state feedback of the Small cell is then sent by the UE to the MeNB; while the UL channel state can be sent to the MeNB, for example by the candidate cell directly to the MeNB via the X2 interface (the additional latency from using X2 should not be an issue in this instance). The full functionality (e.g. offload operation) in the secondary cell / assisting cell will start under one of the following conditions:
(i) no cell deactivation received before the timer expires; or
(ii) an unconditional cell activation message is received.

Normally the MeNB would take the decision on whether or not to continue with the candidate cell activation. An "unconditional cell activation message" means an Assisting Cell Activation Request message having no time window, in other words not time-limited with respect to the activation.

A second embodiment is like the variation of the first embodiment except that the UE forwards an explicit activation message to the Small Cell, typically following initial PRACH access (without a specific preamble). The full functionality (i.e. offload operation) in the secondary cell / assisting cell will start soon after, e.g. if a MAC control element activating a Assisting Cell is sent successfully in subframe n, then the Assisting Cell has to be ready for operation in subframe n+8.

Figure 7 shows the activation procedure in this embodiment. The signalling sequence is the same as for the first embodiment except for the form of the activation request signal from the UE 1 to the SCeNB 21. In the second embodiment, the UE, instead of sending a PRACH preamble which implies activation, forwards an explicit activation message to the SCeNB as shown by "Assisting Cell Activation Request" in Figure 7. In response, instead of the RAR shown in Figure 6, the SCeNB transmits an Assisting Cell Activation Response to the UE as shown in Figure 7. Thus, the Assisting Cell Activation Request/Response replace the special PRACH message and RAR in the first embodiment. The UE again transmits an Assisting Cell Activation Response to the MeNB, which may either be done by simply relaying (forwarding) the Response from the SCeNB, or by generating a new response message to include timing information for example.

In third/fourth embodiments, which otherwise are like the first/second embodiments, the response to activation signalling from the UE to the Small cell (Assisting Cell) is sent via the X2 interface to the Macro eNB. This may include channel state reports and/or timing information from the UE (reported from UE to SCeNB and then forwarded to the MeNB). In other words, the two MAC signals "Assisting Cell Activation Response", one from SCeNB to UE and the other from UE to MeNB, are replaced by a single X2AP signal from SCeNB to MeNB.

In a further embodiment, the cell de-activation procedure follows the similar steps to those described above with respect to the activation procedure, to route the deactivation signalling via the UE. The deactivation request may be initiated by 1) the Macro eNodeB in cases such as the quality of the SPCell/assisting cell cannot meet the QoS requirements of service(s), or the Macro eNodeB decides offloading is not required; 2) by the Small Cell eNodeB when it needs to release the resources due to the bad channel quality or heavy load. Case 1) here corresponds to so-called "dual connectivity" where the MeNB is a mobility anchor for the UE towards the core network, which also allows the MeNB to monitor all the UE's traffic including traffic via the Small Cell.

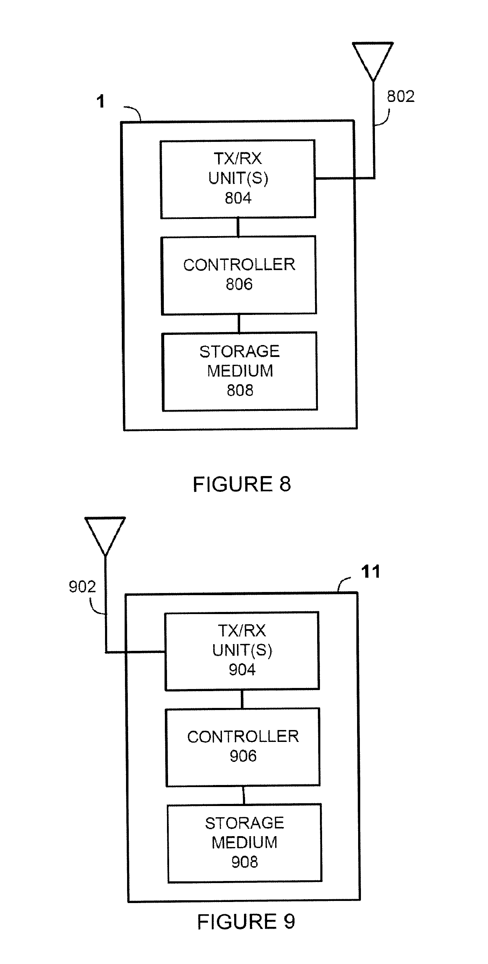

Figure 8 is a block diagram illustrating an example of a UE 1 to which the present invention may be applied. The UE 1 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE 1 includes transmitter/receiver unit(s) 804 connected to at least one antenna 802 (together defining a communication unit) and a controller 806 having access to memory in the form of a storage medium 808. The controller 806 may be, for example, Microprocessor, digital signal processor (DSP), application-specific integrated circuit (ASIC), field-programmable gate array (FPGA), or other logic circuitry programmed or otherwise configured to perform the various functions described above. For example, the various functions described above may be embodied in the form of a computer program stored in the storage medium 808 and executed by the controller 806. The transmission/reception unit 804 is arranged, under control of the controller 806, to receive the Assisting Cell Activation Request from the MeNB, transmitting the Assisting Cell Activation Request to the SCeNB and so forth as discussed previously.

Figure 9 is a block diagram illustrating an example of an eNodeB 11 suitable for use as either the MeNB or the SCeNB referred to above. The base station includes transmitter/receiver unit(s) 904 connected to at least one antenna 902 (together defining a communication unit) and a controller 906. The controller may be, for example, a Microprocessor, DSP, ASIC, FPGA, or other logic circuitry programmed or otherwise configured to perform the various functions described above. For example, the various functions described above may be embodied in the form of a computer program stored in the storage medium 908 and executed by the controller 906. The transmission/reception unit 904 is responsible for transmission of the Assisting Cell Activation Request (MeNB) or Response (SCeNB) and so on under control of the controller 906.

To summarise, embodiments of the present invention may provide fast, efficient and reliable activation and deactivation of an assisting cell (e.g. "secondary PCell" or SPCell) in Small Cell scenarios, via a mobile station (terminal). To achieve this end, embodiments of the present invention allow the terminal to act as proxy for activation/deactivation requests from the PCell to one or more assisting cells. Moreover, the assisting cells may be activated on a trial basis for further evaluation of the channel condition, prior to fully activating the assisting cell for offloading traffic of the terminal (or a specific service thereof) from the PCell.

Various modifications are possible within the scope of the present invention.

The term "cell" in this specification is to be interpreted broadly. For example, it is possible to refer to communication channels associated with a cell being transmitted from or by the cell (in the downlink), or transmitted to a cell (in the uplink), even if the transmission or reception is actually carried out by one or more antennas or antenna ports of a base station. Whilst the term "cell" normally implies both a downlink and an uplink, this is not essential and in the present invention at least one cell may be an uplink-only cell. The term "cell" is intended also to include sub-cells, which could be sub-divisions of a cell based on using particular antennas or corresponding to different geographical areas within a cell. References to performing certain actions "at a cell" generally implies performing those actions in a base station which provides that cell. The cells may be associated with different base stations or with the same base station. The term "base station" itself has a broad meaning and encompasses, for example, an access point or transmission point. The terms "network" and "system" are used interchangeably in this specification and intended to have an equivalent meaning, and the "E-UTRAN" of LTE is one possible network/system to which the present invention may be applied.

Conventionally, a UE obtains system information from a single PCell, but embodiments of the present invention are not restricted to such an arrangement, and in future it may be possible to regard more than one cell as PCells of the same UE.

The invention is equally applicable to LTE FDD and TDD, and the principle applied to other communications systems such as UMTS. If the invention were to be included in 3GPP specifications for LTE it would probably be in the following form:-
- New MAC signalling
- New UE behaviour in relation to the mechanism
- New X2AP signalling

### Industrial Applicability

Fast and efficient activation/deactivation of an assisting cell in a SCN contributes to optimal usage of system capacity and to improving service to users of mobile stations.

## Claims

1. A method for activation of a wireless communications link between a terminal (UE) and a first base station (SCeNB) under control of a second base station (MeNB), the method comprising:
the second base station (MeNB) sending a first activation request signal to the terminal (UE); and
the terminal (UE), in response to the first activation request signal, sending a second activation request signal to the first base station (SCeNB).

2. The method according to claim 1 further comprising:
the first base station (SCeNB) sending, in response to the second activation request signal, a first activation response to the terminal (UE); and
the terminal (UE) sending, in response to the first activation response, a second activation response to the second base station (MeNB).

3. The method according to claim 1 or 2 wherein the first base station controls a Small Cell for providing the wireless communications link and the second base station controls a Macro Cell for wirelessly communicating with the terminal.

4. The method according to claim 1 further comprising:
the first base station sending an activation response directly to the second base station.

5. The method according to any preceding claim wherein the first activation request signal specifies a cell ID of a cell controlled by the first base station (SCeNB).

6. The method according to any preceding claim wherein the first activation request signal specifies a time period for activation of the communications link.

7. The method according to claim 6 wherein the communications link is activated with limited functionality during said time period.

8. The method according to claim 6 or 7 further comprising the second base station (MeNB) determining whether to maintain the communications link after expiry of said time period.

9. The method according to any preceding claim further comprising at least one of the terminal and the first base station (SCeNB) sending a measurement report to the second base station regarding a channel quality of said communications link.

10. The method according to any preceding claim further comprising deactivating the communications link by:
the second base station (MeNB) sending a first deactivation request signal to the terminal (UE); and
the terminal (UE) sending a second deactivation request signal to the first base station (SCeNB).

11. The method according to any preceding claim further comprising deactivating the communications link by:
the first base station (SCeNB) sending a deactivation request signal to the second base station (MeNB) either directly or via the terminal (UE).

12. The method according to any preceding claim wherein the first activation request signal comprises a MAC message.

13. The method according to any preceding claim wherein the second activation request signal comprises a PRACH preamble or a MAC message.

14. A wireless communication system comprising:
a first base station (SCeNB);
a second base station (MeNB); and
a terminal (UE); wherein
the second base station (MeNB) is arranged to send a first activation request signal to the terminal (UE);
the terminal (UE) is arranged to send a second activation request signal to the first base station (SCeNB); and
the first base station (SCeNB) is arranged to activate a wireless communications link between the first base station and the terminal in response to the second activation request signal.

15. A first base station (SCeNB) in a wireless communication system comprising, in addition to the first base station, a second base station (MeNB) and a terminal (UE); wherein
the first base station (SCeNB) is arranged to receive, from the terminal (UE), an activation request signal with respect to a communications link between the first base station and the terminal; and
the first base station (SCeNB) is arranged to activate a wireless communications link between the first base station and the terminal in response to the activation request signal and transmit a confirmation of the activation to the second base station (MeNB).

16. A second base station (MeNB) in a wireless communication system comprising, in addition to the second base station, a first base station (SCeNB) and a terminal (UE); wherein
the second base station (MeNB) is arranged to send a first activation request signal to the terminal (UE) for forwarding to the first base station (SCeNB); and
the second base station (MeNB) is arranged to receive a confirmation of activation of a wireless communications link between the first base station (SCeNB) and the terminal.

17. A terminal (UE) for use in a wireless communication system, the system having a first base station (SCeNB) and a second base station (MeNB), wherein
the terminal is arranged to receive, from the second base station (MeNB), a first activation request signal with respect to a wireless communications link between the first base station and the terminal; and
the terminal is arranged to send a second activation request signal to the first base station (SCeNB) for activating the communications link between the first base station and the terminal, in response to the first activation request signal.

## Amended claims

### Amended claims in accordance with Rule 137(2) EPC.

1. A method for activation of a wireless communications link between a terminal (UE) and a first base station (SCeNB) under control of a second base station (MeNB), the method comprising:
the second base station (MeNB) sending a first activation request signal to the terminal (UE); and
the terminal (UE), in response to the first activation request signal, sending a second activation request signal to the first base station (SCeNB);
**characterised in that** the first activation request signal specifies a time period for activation of the wireless communications link; and the wireless communications link is activated with limited functionality during said time period.

2. The method according to claim 1 further comprising the second base station (MeNB) determining whether to maintain the wireless communications link after expiry of said time period.

3. The method according to claim 1 or 2 further comprising:
the first base station (SCeNB) sending, in response to the second activation request signal, a first activation response to the terminal (UE); and
the terminal (UE) sending, in response to the first activation response, a second activation response to the second base station (MeNB).

4. The method according to claim 1, 2 or 3 wherein the first base station controls a Small Cell for providing the wireless communications link and the second base station controls a Macro Cell for wirelessly communicating with the terminal.

5. The method according to claim 1 further comprising:
the first base station sending an activation response directly to the second base station.

6. The method according to any preceding claim wherein the first activation request signal specifies a cell ID of a cell controlled by the first base station (SCeNB).

7. The method according to any preceding claim further comprising at least one of the terminal and the first base station (SCeNB) sending a measurement report to the second base station regarding a channel quality of said communications link.

8. The method according to any preceding claim further comprising deactivating the communications link by:
the second base station (MeNB) sending a first deactivation request signal to the terminal (UE); and
the terminal (UE) sending a second deactivation request signal to the first base station (SCeNB).

9. The method according to any preceding claim further comprising deactivating the communications link by:
the first base station (SCeNB) sending a deactivation request signal to the second base station (MeNB) either directly or via the terminal (UE).

10. The method according to any preceding claim wherein the first activation request signal comprises a MAC message.

11. The method according to any preceding claim wherein the second activation request signal comprises a PRACH preamble or a MAC message.

12. A wireless communication system comprising:
a first base station (SCeNB);
a second base station (MeNB); and
a terminal (UE); wherein
the second base station (MeNB) is arranged to send a first activation request signal to the terminal (UE) with respect to a wireless communications link between the first base station (SCeNB) and the terminal; and
the terminal (UE) is arranged to send a second activation request signal to the first base station (SCeNB) in response to the first activation request signal;
**characterised in that** the first activation request signal specifies a time period for activation of the wireless communications link, during which time period the wireless communication link is to be activated with limited functionality.

13. A second base station (MeNB) in a wireless communication system comprising, in addition to the second base station, a first base station (SCeNB) and a terminal (UE); wherein
the second base station (MeNB) is arranged to send a first activation request signal to .the terminal (UE) with respect to a wireless communications link between the first base station (SCeNB) and the terminal, for forwarding to the first base station (SCeNB); **characterised in that**
the first activation request signal specifies a time period for activation of the wireless communications link, during which time period the wireless communication link is to be activated with limited functionality.

14. A terminal (UE) for use in a wireless communication system, the system having a first base station (SCeNB) and a second base station (MeNB), wherein
the terminal is arranged to receive, from the second base station (MeNB), a first activation request signal with respect to a wireless communications link between the first base station (SCeNB) and the terminal; and
the terminal is arranged to send a second activation request signal to the first base station (SCeNB) for activating the communications link between the first base station and the terminal, in response to the first activation request signal; .
**characterised in that** the terminal is responsive to a time period for activation of the wireless communications link specified in the first activation request signal, during which time period the wireless communication link is to be activated with limited functionality.
